# EUROPEAN PATENT APPLICATION

(11) **EP 4 276 764 A1**
(43) Date of publication of application: **15.11.2023**
(21) Application number: 21917278.0
(22) Date of filing: 21.12.2021
(51) Int. Cl.: G06T 17/20

(54) **THREE-DIMENSIONAL POINT CLOUD DATA PROCESSING METHOD AND APPARATUS, AND STORAGE MEDIUM AND ELECTRONIC APPARATUS**

(30) Priority: 06.01.2021 CN 202110015204
(71) Applicant: ZTE Corporation, Shenzhen, Guangdong 518057 (CN)
(72) Inventor: BAI, Yaxian, Shenzhen, Guangdong 518057 (CN); HUANG, Cheng, Shenzhen, Guangdong 518057 (CN)
(74) Representative: Novagraaf Technologies
(86) International application number: PCT/CN2021/140122
(87) International publication number: WO 2022/148238

(57) **Abstract**

Provided are a three-dimensional point cloud data processing method and apparatus, a storage medium, and an electronic apparatus. The method includes: identifying, from a container file of a geometrically encoded point cloud bit stream of an original point cloud, one geometrically encoded point cloud tile base track and one or more geometrically encoded point cloud tile tracks, wherein the one geometrically encoded point cloud tile base track and one or more geometrically encoded point cloud tile tracks correspond to one or more three-dimensional spatial regions of the original point cloud; decoding geometrically encoded point cloud compression data encapsulated in the one or more geometrically encoded point cloud tile tracks, wherein the geometrically encoded point cloud compression data corresponds to partial regions of the one or more three-dimensional spatial regions; and rendering a point cloud in the partial three-dimensional spatial regions according to the decoded point cloud data. In the present disclosure, three-dimensional spatial region information in a point cloud can be used to achieve partial access of the point cloud, thereby increasing the decoding and transmission efficiency of point cloud data.

## Description

### Technical Field

Embodiments of the present disclosure relate to the technical field of immersive media, and in particular, to a three-dimensional point cloud data processing method and apparatus, a storage medium and an electronic apparatus.

### Background

Three-dimensional point cloud is a set of a group of discrete points distributed irregularly in a space and expressing the spatial structure and surface properties of a three-dimensional object or scene. Each point in the point cloud at least has three-dimensional position information, and may also have color, material or other information according to different application scenarios. The point cloud can be captured by multiple cameras and depth sensors, in which the number of points can reach thousands to billions; there is no connection and sequence between the points, and the points can be randomly sorted. Therefore, the point cloud draws wide attention in the industry due to its flexible and convenient expression form and high data precision.

The three-dimensional point cloud is widely applied to application scenarios such as automatic driving, real-time inspection, culture heritage, and 6DoF immersive real-time communication. However, for a large point cloud, when a user applies point cloud data, the user generally only needs to focus on a part of point cloud data belonging to a certain specific spatial region, and does not need to acquire a complete point cloud object, for example:
1) human eye vision-oriented point cloud data, such as free viewpoint broadcasting, immersive real-time communication and digital museum, etc., in which according to the position where a user is located and a viewing direction of the user, corresponding point cloud data is selected to be rendered, and for digital culture heritage, perspective selection according to a viewpoint can also be supported, for virtual tour; and
2) for machine vision-oriented point cloud data, such as automatic driving and navigation, analyzing a part of point cloud data according to the position where a driver is located and a motion trajectory is supported, so as to complete functions such as map rendering, navigation driving and obstacle detection.

Partial access to the three-dimensional point cloud based on spatial regions relies on encoding and system-layer tile processing. Currently, a point cloud compression technology based on geometry encoding supports parallel encoding after dividing a complete point cloud object into a plurality of tiles, and a system layer can respectively store point cloud compression data according to tile identifiers (Tile IDs), but there is still a certain problem: tile identifier-based point cloud partial access and partial transmission technology is only applicable to a scenario where tile division information (i.e. Tile Inventory) does not change over time, and when the tile division information changes dynamically over time, there is no effective partial access and transmission method.

### Summary

Embodiments of the present disclosure provide a three-dimensional point cloud data processing method and apparatus, a storage medium, and an electronic apparatus, so as to at least solve the problem in the related art that tile identifier-based point cloud partial access is only applicable to a scenario where tile division information does not change over time.

According to some embodiments of the present disclosure, provided is a three-dimensional point cloud data processing method, the method including: one geometrically encoded point cloud tile base track and one or more geometrically encoded point cloud tile tracks are identified from a container file of a geometrically encoded point cloud bit stream of an original point cloud, wherein the one geometrically encoded point cloud tile base track and one or more geometrically encoded point cloud tile tracks correspond to one or more three-dimensional spatial regions of the original point cloud; geometrically encoded point cloud compression data encapsulated in the one or more geometrically encoded point cloud tile tracks is decoded, wherein the geometrically encoded point cloud compression data corresponds to partial regions of the one or more three-dimensional spatial regions; and a point cloud is rendered in the partial three-dimensional spatial regions according to the decoded point cloud data.

In some exemplary embodiments, the one or more three-dimensional spatial regions include: three-dimensional spatial region information determined according to a spatial region information data box of geometrically encoded point cloud data in a geometrically encoded point cloud tile base track sample entry, wherein the three-dimensional spatial region information is static three-dimensional spatial region information not changing over time.

In some exemplary embodiments, the one or more three-dimensional spatial regions include: three-dimensional spatial region information determined according to a dynamic geometrically encoded point cloud spatial region metadata track, wherein the three-dimensional spatial region information is dynamic three-dimensional spatial region information dynamically changing over time.

In some exemplary embodiments, the three-dimensional spatial region information at least includes one of: the number of spatial regions, identifiers of the spatial regions, vertex coordinates of the spatial regions, geometric parameters of the spatial regions, tile identifiers corresponding to the spatial regions, and identifiers of the geometrically encoded point cloud tile tracks.

In some exemplary embodiments, the step that geometrically encoded point cloud compression data encapsulated in the one or more geometrically encoded point cloud tile tracks is decoded includes: geometry tile tracks corresponding to the partial three-dimensional spatial regions are determined according to static spatial region information of a geometry tile track sample entry of the geometrically encoded point cloud data; and the geometrically encoded point cloud data in the geometry tile tracks is decoded.

In some exemplary embodiments, the static spatial region information of the geometry tile track sample entry of the geometrically encoded point cloud data at least includes one of: a spatial region information display flag bit, a static spatial region flag bit, a spatial region identifier and three-dimensional spatial region information.

In some exemplary embodiments, the step that geometrically encoded point cloud compression data encapsulated in the one or more geometrically encoded point cloud tile tracks is decoded further includes: geometry tile tracks corresponding to the partial three-dimensional spatial regions are determined according to dynamic spatial region information of a geometry tile track sample entry of geometrically encoded point cloud data; and the geometrically encoded point cloud data in the geometry tile tracks is decoded.

In some exemplary embodiments, the dynamic spatial region information of the geometry tile track sample entry includes at least one of: a spatial region information display flag bit, a dynamic spatial region flag bit and a spatial region identifier.

In some exemplary embodiments, the step that geometrically encoded point cloud compression data encapsulated in the one or more geometrically encoded point cloud tile tracks is decoded includes: geometry tile tracks corresponding to the partial three-dimensional spatial regions are determined according to geometry tile track identifiers in the spatial region information data box of the geometrically encoded point cloud data, or geometry tile tracks corresponding to the partial three-dimensional spatial regions are determined according to geometry tile track identifiers in a dynamic geometrically encoded point cloud spatial region metadata track sample; and the geometrically encoded point cloud data in the geometry tile tracks is decoded.

In some exemplary embodiments, the one or more three-dimensional spatial regions include: the three-dimensional spatial region information determined according to a three-dimensional spatial region information descriptor in a main tile adaptation set corresponding to a geometry tile base track in a DASH MPD description file, wherein the three-dimensional spatial region information is static spatial region information not changing over time.

In some exemplary embodiments, the one or more three-dimensional spatial regions include: the three-dimensional spatial region information determined according to an adaptation set containing dynamic three-dimensional spatial region information metadata in a DASH MPD description file, wherein the three-dimensional spatial region information is dynamic spatial region information dynamically changing over time.

In some exemplary embodiments, the geometrically encoded point cloud data is represented by the main tile adaptation set corresponding to the geometry tile base track and one or more tile component adaptation sets corresponding to geometry tile tracks in the DASH MPD description file.

In some exemplary embodiments, the three-dimensional spatial region information includes at least one of: the number of spatial regions, identifiers of the spatial regions, vertex coordinates of the spatial regions, geometric parameters of the spatial regions, and tile identifiers corresponding to the spatial regions.

In some exemplary embodiments, the step that geometrically encoded point cloud compression data encapsulated in the one or more geometrically encoded point cloud tile tracks is decoded includes: a main tile adaptation set and one or more adaptation sets containing geometry tile tracks and corresponding to the partial three-dimensional spatial regions are determined according to a three-dimensional spatial region identifier descriptor in DASH MPD description file pre-selection signaling; or a main tile adaptation set and one or more adaptation sets containing geometry tile tracks and corresponding to the partial three-dimensional spatial regions are determined according to point cloud tile adaptation set identifiers described by a three-dimensional spatial region descriptor in the main tile adaptation set; and geometrically encoded point cloud data corresponding to the main tile adaptation set and the one or more adaptation sets containing the geometry tile tracks is decoded.

In some exemplary embodiments, the three-dimensional spatial region identifier descriptor in the pre-selection signaling comprises a spatial region identifier, which is the same as a spatial region identifier in a spatial region information data box of the geometrically encoded point cloud data.

In some exemplary embodiments, the step that geometrically encoded point cloud compression data encapsulated in the one or more geometrically encoded point cloud tile tracks is decoded includes: a main tile adaptation set is determined, and one or more adaptation sets containing geometry tile tracks and corresponding to the partial three-dimensional spatial regions are determined according to a three-dimensional spatial region descriptor in the adaptation sets containing the geometry tile tracks; and geometrically encoded point cloud data corresponding to the main tile adaptation set and the one or more adaptation sets containing the geometry tile tracks is decoded.

In some exemplary embodiments, the three-dimensional spatial region descriptor includes at least one of: a spatial region identifier, a spatial region position, a spatial region size, and a point cloud tile adaptation set identifier corresponding to the spatial region.

According to some other embodiments of the present disclosure, provided is a three-dimensional point cloud data processing apparatus, the apparatus including: an identification module, configured to identify, from a container file of a geometrically encoded point cloud bit stream of an original point cloud, one geometrically encoded point cloud tile base track and one or more geometrically encoded point cloud tile tracks, wherein the one geometrically encoded point cloud tile base track and one or more geometrically encoded point cloud tile tracks correspond to one or more three-dimensional spatial regions of the original point cloud; a decoding module, configured to decode geometrically encoded point cloud compression data encapsulated in the one or more geometrically encoded point cloud tile tracks, wherein the geometrically encoded point cloud compression data corresponds to partial regions of the one or more three-dimensional spatial regions; and a rendering module, configured to render a point cloud in the partial three-dimensional spatial regions according to the decoded point cloud data.

According to still some other embodiments of the present disclosure, a computer-readable storage medium is further provided, the computer-readable storage medium stores a computer program, wherein the computer program is configured to execute the steps in any one of the method embodiments when running.

According to still some other embodiments of the present disclosure, an electronic apparatus is further provided, and the electronic apparatus includes a memory and a processor; wherein the memory stores a computer program, and the processor is configured to run the computer program to execute the steps in any one of the method embodiments.

In the embodiments of the present disclosure, by three-dimensional spatial region information in a point cloud, a part of the point cloud can be accessed on the basis of a dynamic spatial region, thereby increasing the decoding and transmission efficiency of point cloud data.

### Brief Description of the Drawings

Fig. 1 is a block diagram of a hardware structure of a mobile terminal according to embodiments of the present disclosure;
Fig. 2 is a flowchart of a 3D point cloud data processing method according to embodiments of the present disclosure;
Fig. 3 is a structural block diagram of a 3D point cloud data processing apparatus according to embodiments of the present disclosure;
Fig. 4 is a schematic diagram of a point cloud single-track storage structure according to embodiments of the present disclosure;
Fig. 5 is a schematic diagram of a point cloud multi-track storage structure according to embodiments of the present disclosure;
Fig. 6 is a schematic diagram of a basic structure of a 3D point cloud tile track according to embodiments of the present disclosure;
Fig. 7 is a schematic diagram of a point cloud compression data storage structure according to Example 1 of embodiment 1 of the present disclosure;
Fig. 8 is a flowchart of partial access based on a static point cloud spatial region according to Example 1 of embodiment 1 of the present disclosure;
Fig. 9 is a flowchart of partial access based on a static point cloud spatial region according to Example 2 in embodiment 1 of the present disclosure;
Fig. 10 is a schematic diagram of a point cloud compression data storage structure according to example 2 in Embodiment 1 of the present disclosure;
Fig. 11 is a flowchart of partial access based on a dynamic point cloud spatial region according to examples in embodiment 1 of the present disclosure;
Fig. 12 is a schematic diagram of a point cloud compression data storage structure according to example 4 in embodiment 1 of the present disclosure;
Fig. 13 is a flowchart of partial access based on a dynamic point cloud spatial region according to example 4 in embodiment 1 of the present disclosure;
Fig. 14 is a schematic structural diagram of a pre-selection signaling-based 3D point cloud description file according to embodiment 2 of the present disclosure;
Fig. 15 is a schematic diagram of static spatial region pre-selection signaling according to Example 1 of embodiment 2 of the present disclosure;
Fig. 16 is a flowchart of point cloud transmission based on a static point cloud spatial region according to Example 1 of embodiment 2 of the present disclosure;
Fig. 17 is a schematic diagram of dynamic spatial region pre-selection signaling according to example 2 in embodiment 2 of the present disclosure; and
Fig. 18 is a flowchart of point cloud transmission based on a dynamic point cloud spatial region according to example 2 in embodiment 2 of the present disclosure.

### Detailed Description of the Embodiments

Hereinafter, embodiments of the present disclosure will be described in detail with reference to the accompanying drawings and in conjunction with the embodiments.

It should be noted that the terms "first", "second" etc., in the description, claims, and accompanying drawings of the present disclosure are used to distinguish similar objects, and are not necessarily used to describe a specific sequence or precedence order.

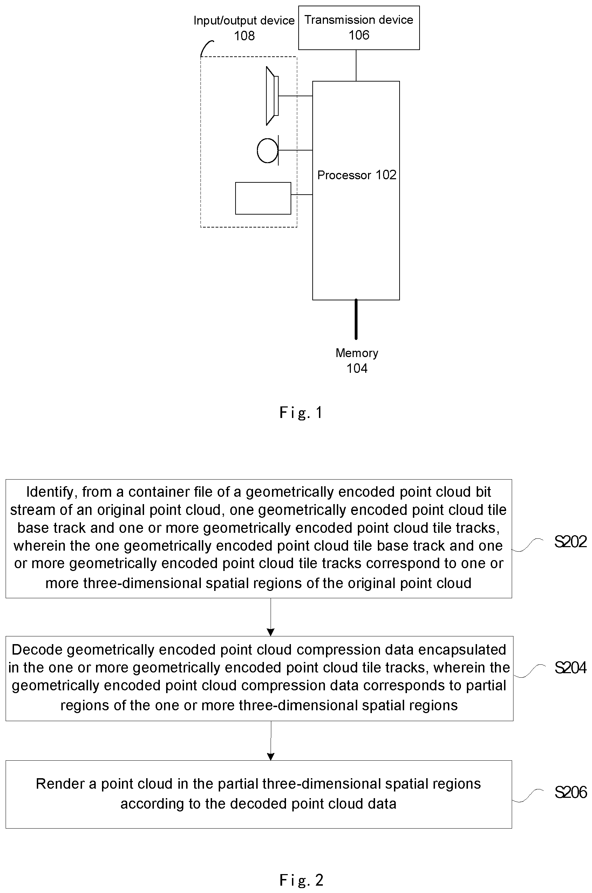

Method embodiments provided in the embodiments of the present disclosure can be executed in a mobile terminal, a computer terminal or a similar computing apparatus. Taking the method embodiments being executed on a mobile terminal as an example, Fig. 1 is a block diagram of a hardware structure of a mobile terminal for a 3D point cloud data processing method according to embodiments of the present disclosure. As shown in Fig. 1, the mobile terminal may include: one or more (Fig. 1 shows only one) processors 102 (the processors 102 may include, but not limited to processing apparatus such as a micro processor, MCU or a programmable logic device, FPGA); and a memory 104 for storing data; wherein the mobile terminal can further include a transmission device 106 and an input/output device 108 for communication functions. A person of ordinary skill in the art would understand that the structure as shown in Fig. 1 is merely exemplary, and does not limit the structure of the mobile terminal. For example, the mobile terminal may also include more or fewer assemblies than those shown in Fig. 1, or have different configuration from that shown in Fig. 1.

The memory 104 may be used for storing a computer program, for example, a software program and module of application software, such as a computer program corresponding to the 3D point cloud data processing method in the embodiments of the present disclosure; and the processor 102 executes various functional applications and data processing by running the computer program stored in the memory 104, i.e. implementing the described method. The memory 104 may include a high-speed random access memory, and may also include a non-transitory memory, such as one or more magnetic storage apparatuses, flash memories or other non-transitory solid-state memories. In some examples, the memory 104 may further include memories remotely arranged with respect to the processors 102, and these remote memories may be connected to the mobile terminal via a network. Examples of the network include, but are not limited to the Internet, an intranet, a local area network, a mobile communication network and combinations thereof.

The transmission apparatus 106 is configured to receive or send data via a network. Specific examples of the network may include a wireless network provided by a communication provider of the mobile terminal. In one example, the transmission apparatus 106 includes a network adapter (Network Interface Controller, NIC for short) which may be connected to other network devices by means of a base station, thereby being able to communicate with the Internet. In one example, the transmission apparatus 106 may be a Radio Frequency (RF for short) module which is configured to communicate with the Internet in a wireless manner.

Provided in the present embodiment is a 3D point cloud data processing method operable in the described mobile terminal. Fig. 2 is a method flowchart according to embodiments of the present disclosure. As shown in Fig. 2, the flow includes the following steps:
step S202, one geometrically encoded point cloud tile base track and one or more geometrically encoded point cloud tile tracks are identified from a container file of a geometrically encoded point cloud bit stream of an original point cloud, wherein the one geometrically encoded point cloud tile base track and one or more geometrically encoded point cloud tile tracks correspond to one or more three-dimensional spatial regions of the original point cloud;
step S204, geometrically encoded point cloud compression data encapsulated in the one or more geometrically encoded point cloud tile tracks is decoded, wherein the geometrically encoded point cloud compression data corresponds to partial regions of the one or more three-dimensional spatial regions; and
step S206: a point cloud is rendered in the partial three-dimensional spatial regions according to the decoded point cloud data.

In the present embodiment, the one or more three-dimensional spatial regions may include: three-dimensional spatial region information determined according to a spatial region information data box of geometrically encoded point cloud data in a geometrically encoded point cloud tile base track sample entry, wherein the three-dimensional spatial region information is static three-dimensional spatial region information not changing over time.

In the present embodiment, the one or more three-dimensional spatial regions may include: three-dimensional spatial region information determined according to a dynamic geometrically encoded point cloud spatial region metadata track, wherein the three-dimensional spatial region information is dynamic three-dimensional spatial region information dynamically changing over time.

In the present embodiment, the three-dimensional spatial region information at least includes one of: the number of spatial regions, identifiers of the spatial regions, vertex coordinates of the spatial regions, geometric parameters of the spatial regions, tile identifiers corresponding to the spatial regions, and identifiers of the geometrically encoded point cloud tile tracks.

In step S204 of the present embodiment, geometry tile tracks corresponding to the partial three-dimensional spatial regions are determined according to static spatial region information of a geometry tile track sample entry of the geometrically encoded point cloud data; and the geometrically encoded point cloud data in the geometry tile tracks is decoded.

In the embodiment above, the static spatial region information of the geometry tile track sample entry of the geometrically encoded point cloud data at least includes one of: a spatial region information display flag bit, a static spatial region flag bit, a spatial region identifier and three-dimensional spatial region information.

In step S204 of the present embodiment, geometry tile tracks corresponding to the partial three-dimensional spatial regions can also be determined according to dynamic spatial region information of a geometry tile track sample entry of geometrically encoded point cloud data; and the geometrically encoded point cloud data in the geometry tile tracks is decoded.

In the embodiment above, the dynamic spatial region information of the geometry tile track sample entry includes at least one of: a spatial region information display flag bit, a dynamic spatial region flag bit and a spatial region identifier.

In step S204 of the present embodiment, geometry tile tracks corresponding to the partial three-dimensional spatial regions can also be determined according to geometry tile track identifiers in the spatial region information data box of the geometrically encoded point cloud data, or geometry tile tracks corresponding to the partial three-dimensional spatial regions are determined according to geometry tile track identifiers in a dynamic geometrically encoded point cloud spatial region metadata track sample; and the geometrically encoded point cloud data in the geometry tile tracks is decoded.

In the embodiment above, the one or more three-dimensional spatial regions may include: the three-dimensional spatial region information determined according to a three-dimensional spatial region information descriptor in a main tile adaptation set corresponding to a geometry tile base track in a DASH MPD description file, wherein the three-dimensional spatial region information is static spatial region information not changing over time.

In the embodiment above, the one or more three-dimensional spatial regions may include: the three-dimensional spatial region information determined according to an adaptation set containing dynamic three-dimensional spatial region information metadata in a DASH MPD description file, wherein the three-dimensional spatial region information is dynamic spatial region information dynamically changing over time.

In the embodiment above, the geometrically encoded point cloud data is represented by the main tile adaptation set corresponding to the geometry tile base track and one or more tile component adaptation sets corresponding to geometry tile tracks in the DASH MPD description file.

In the embodiment above, the three-dimensional spatial region information includes at least one of: the number of spatial regions, identifiers of the spatial regions, vertex coordinates of the spatial regions, geometric parameters of the spatial regions, and tile identifiers corresponding to the spatial regions.

In step S204 of the present embodiment, a main tile adaptation set and one or more adaptation sets containing geometry tile tracks and corresponding to the partial three-dimensional spatial regions can also be determined according to a three-dimensional spatial region identifier descriptor in DASH MPD description file pre-selection signaling; or a main tile adaptation set and one or more adaptation sets containing geometry tile tracks and corresponding to the partial three-dimensional spatial regions are determined according to point cloud tile adaptation set identifiers described by a three-dimensional spatial region descriptor in the main tile adaptation set; and geometrically encoded point cloud data corresponding to the main tile adaptation set and the one or more adaptation sets containing the geometry tile tracks is decoded.

In the embodiment above, the three-dimensional spatial region identifier descriptor in the pre-selection signaling comprises a spatial region identifier, which is the same as a spatial region identifier in a spatial region information data box of the geometrically encoded point cloud data.

In step S204 of the present embodiment, a main tile adaptation set is determined, and one or more adaptation sets containing geometry tile tracks and corresponding to the partial three-dimensional spatial regions can be determined according to a three-dimensional spatial region descriptor in the adaptation sets containing the geometry tile tracks; and geometrically encoded point cloud data corresponding to the main tile adaptation set and the one or more adaptation sets containing the geometry tile tracks is decoded.

In the embodiment above, the three-dimensional spatial region descriptor includes at least one of: a spatial region identifier, a spatial region position, a spatial region size, and a point cloud tile adaptation set identifier corresponding to the spatial region.

From the description of the embodiments above, a person skilled in the art would have been able to clearly understand that the methods in the embodiments above may be implemented by using software and necessary general hardware platforms, and of course may also be implemented using hardware, but in many cases, the former is a better embodiment. On the basis of such understanding, the portion of the technical solution of the present disclosure that contributes in essence or contributes to the related art may be embodied in the form of a software product. The computer software product is stored in a storage medium (such as an ROM/RAM, a magnetic disk and an optical disc), and includes several instructions for enabling a terminal device (which may be a mobile phone, a computer, a server, or a network device, etc.) to perform the methods as described in various embodiments of the present disclosure.

The present embodiment further provides a 3D point cloud data processing apparatus, the apparatus is used to implement the foregoing embodiments and preferred embodiments, and what has been described will not be repeated again. As used below, the term "module" may implement a combination of software and/or hardware of predetermined functions. Although the apparatus described in the following embodiments is preferably implemented in software, implementation in hardware or a combination of software and hardware is also possible and could have been conceived.

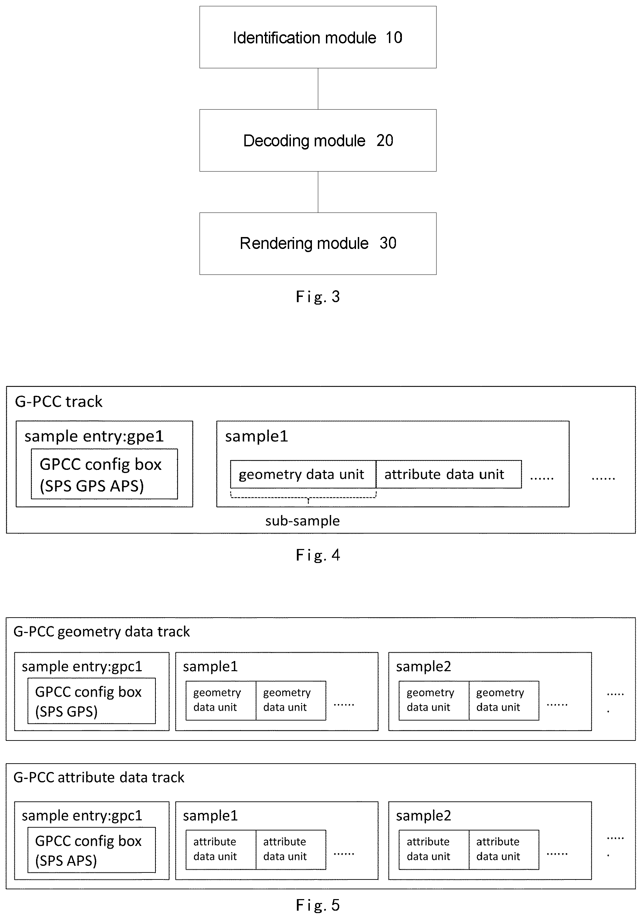

Fig. 3 is a structural block diagram of a 3D point cloud data processing apparatus according to embodiments of the present disclosure. As shown in Fig. 3, the apparatus includes an identification module 10, a decoding module 20, and a rendering module 30.

The identification module 10 is configured to identify, from a container file of a geometrically encoded point cloud bit stream of an original point cloud, one geometrically encoded point cloud tile base track and one or more geometrically encoded point cloud tile tracks, wherein the one geometrically encoded point cloud tile base track and one or more geometrically encoded point cloud tile tracks correspond to one or more three-dimensional spatial regions of the original point cloud;
the decoding module 20 is configured to decode geometrically encoded point cloud compression data encapsulated in the one or more geometrically encoded point cloud tile tracks, wherein the geometrically encoded point cloud compression data corresponds to partial regions of the one or more three-dimensional spatial regions; and
the rendering module 30 is configured to render a point cloud in the partial three-dimensional spatial regions according to the decoded point cloud data.

It should be noted that the described modules may be implemented by software or hardware. The latter may be implemented in the following manner, but is not limited thereto: all the modules are located in the same processor; or all the modules are located in different processors in any arbitrary combination manner.

To facilitate understanding of the technical solutions provided in some embodiments of the present disclosure, hereinafter, detailed description is made with reference to specific scenario embodiments.

Embodiments of the present disclosure provide a spatial region-based 3D point cloud partial access method, which can describe a space of 3D point cloud compression data by using ISOBMFF, support 3D point cloud spatial region information description, and support storage of 3D point cloud data according to a static spatial region and a dynamic spatial region, thereby providing a partial access mechanism of point cloud data, such that a decoder can select, according to information such as a user space position and a viewing direction, partial 3D point cloud data for parsing, decoding and rendering, thereby increasing the efficiency of point cloud processing. Specific semantics are further described in the embodiments.

In the embodiments of the present disclosure, spatial position information and tile division information of 3D point cloud may be stored in a media file on the basis of an ISO (International Organization for Standardization) base media file format. The base media file format may be operated with reference to MPEG-4 Part 12 ISO Base Media File Format formulated by ISO/IEC JTC1/SC29/WG11 Moving Picture Experts Group (MPEG for short). Point cloud compression data format can be operated on the basis of geometrically encoded point cloud compression technology with reference to MPEG-I Part 9: G-PCC formulated by ISO/IEC JTC1/SC29/WG11 Moving Picture Experts Group (MPEG).

In embodiments of the present disclosure, the 3D point cloud data supports two basic encapsulation modes:

### 1) Single-track:

Fig. 4 is a schematic diagram of a point cloud single-track storage structure according to embodiments of the present disclosure. As shown in Fig. 4, a plurality of components in geometric encoding-based point cloud compression data are stored by a single track. Configuration information, sequence parameter set (SPS), geometric parameter set (GPS), and attribute parameter set (APS), etc. are represented by a configuration information data box in a sample entry; each sample contains geometric data and one or more pieces of attribute data of a frame of point cloud data, wherein the distinction between the geometric data and the attribute data is described by a subsample information data box (Subsample Information box).

### 2) Multi-track:

Fig. 5 is a schematic diagram of a point cloud multi-track storage structure according to embodiments of the present disclosure. As shown in Fig. 5, a plurality of components in geometric encoding-based point cloud compression data can be respectively stored by multiple tracks. Taking a track where geometric data is located as an example, configuration information, sequence parameter set (SPS) and geometric parameter set (GPS) are described in a track sample entry containing the geometric data; each sample contains geometric data of a frame of point cloud data, and similarly, each type of attribute data is also stored respectively by an independent track.

The embodiments of the present disclosure all support two basic point cloud encapsulation formats, i.e. single-track and multi-track, and they are further described in detail in the following embodiments, which are only used to explain some embodiments of the present disclosure and are not used to limit some embodiments of the present disclosure.

### Embodiment 1:

This embodiment provides a spatial region-based 3D point cloud storage method. In this embodiment, spatial region-based 3D point cloud storage is described. When point cloud compression data contains multiple tiles, the point cloud data may be stored in multiple tracks according to different tile identifiers or different spatial region information.

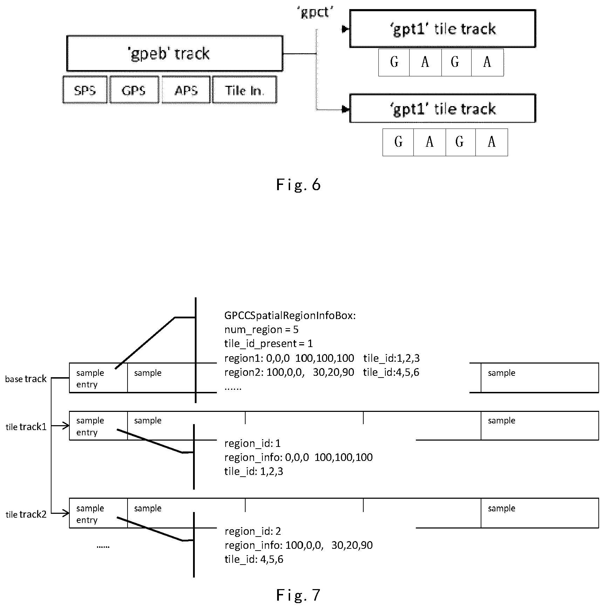

Fig. 6 is a schematic diagram of a basic structure of a 3D point cloud tile track according to embodiments of the present disclosure. As shown in Fig. 6, in this embodiment, a point cloud tile base track (G-PCC tile base track) serves as an entry point of point cloud data access, and contains all common information required for point cloud data decoding, including sequence parameter set (SPS), geometric parameter set (GPS), attribute parameter set (APS), and tile inventory, etc. The point cloud tile base track refers to a plurality of point cloud tile tracks (G-PCC tile tracks) by using track reference information of type 'gpct'; and the plurality of point cloud tile tracks form complete point cloud compression data.

Hereinafter, a 3D point cloud tile base track in this embodiment is described below.

The point cloud tile base track is defined as follows:
the point cloud tile base track has a sample entry of type 'gpeb' or 'gpcb', and is used for storing data units such as point cloud parameter sets, tile inventory, etc. The data units may be stored in sample entries or samples.

When a point cloud tile track referred to by the point cloud tile base track contains all component types (geometric data and all types of attribute data) of the point cloud, a sample entry type of the base track is 'gpeb'; and when a point cloud tile track referred to by the point cloud tile base track contains a single point cloud component type, i.e. each tile track only contains geometric data or certain attribute data, a sample entry type of the base track is 'gpcb'.

When point cloud spatial region information does not change over time, the sample entry of the point cloud tile base track may contain point cloud spatial region information; and when point cloud spatial region information dynamically changes over time, the point cloud tile base track needs to refer to a spatial region timed metadata track.

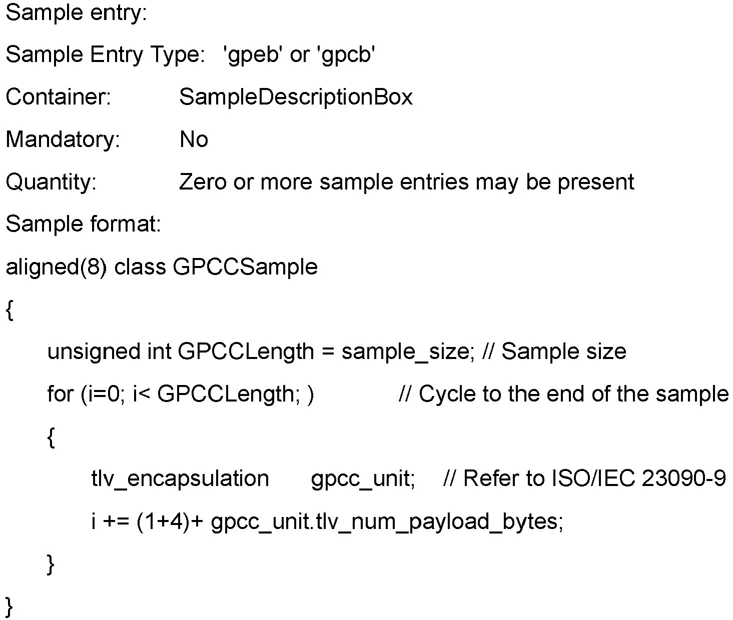

### Semantics:

gpcc_unit: a geometric point cloud compression data unit, and for definition thereof, reference can be made to ISO/IEC 23090-9.

Hereinafter, a 3D point cloud tile track in this embodiment is described below.

The point cloud tile track is defined as follows:
the point cloud tile track has a sample entry of type 'gpt1', and is used for storing partial point cloud compression data belonging to a certain spatial region.

When the point cloud tile track contains all component types (geometric data and all types of attribute data) of the point cloud, the sample entry of the track should contain a point cloud component information data box (GPCCComponentlnfoBox); and when the point cloud tile track only contains geometric data or certain attribute data, the sample entry of the track does not contain a point cloud component information data box.

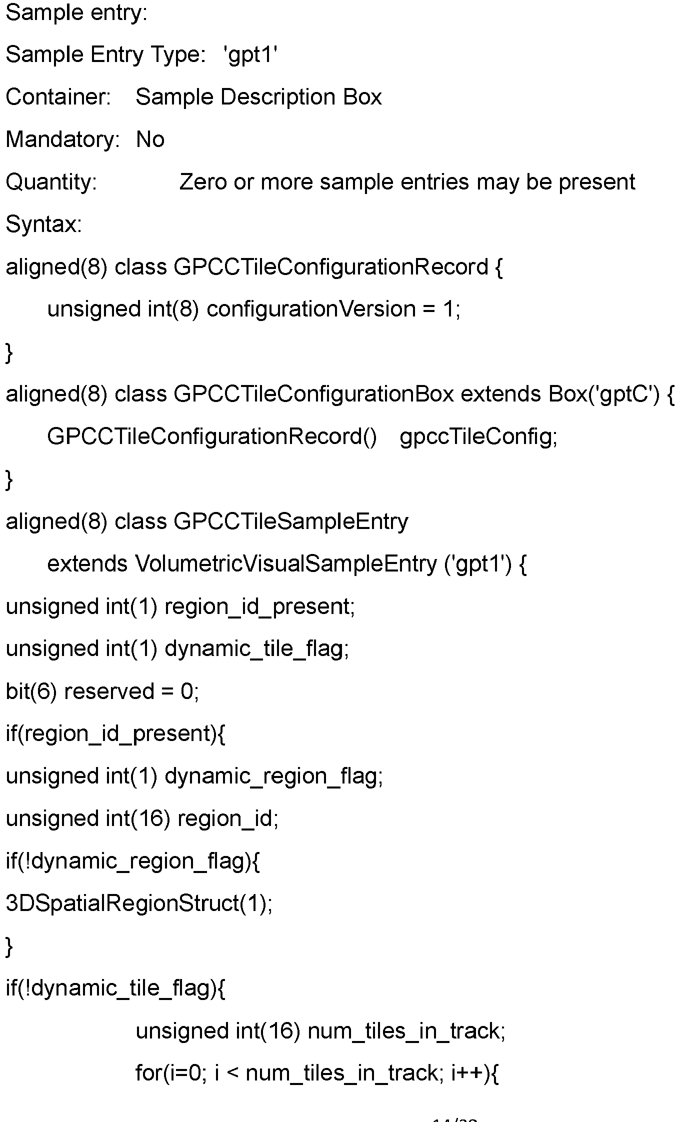

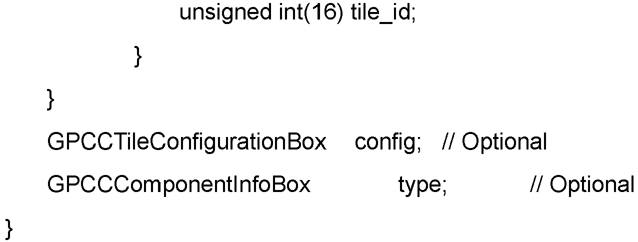

### Semantics:

region_id_present, represents whether a spatial region identifier appears in a point cloud tile track sample entry, wherein the value of region_id_present being 1 represents that a spatial region identifier appears, and the value being 0 represents that a spatial region identifier does not appear;
dynamic_tile_flag, represents whether a tile inventory in a point cloud compression data code stream dynamically changes over time, wherein the value of dynamic_tile_flag being 0 represents that the number and identifiers of tiles in a tile inventory remain unchanged in a time range of the entire track, and the value being 1 represents that the number and identifiers of tiles in the tile inventory dynamically change over time;
dynamic_region_flag, represents whether a spatial region corresponding to point cloud compression data contained in a point cloud tile track changes over time, wherein the value of dynamic_region_flag being 1 represents dynamic change over time, and the value being 0 represents no change;
region_id, represents a spatial region identifier corresponding to point cloud compression data contained in a point cloud tile track, wherein when the spatial region is unchanged, region_id represents a spatial region identifier in a point cloud spatial region information data box (GPCCSpatialRegionlnfoBox), and when the spatial region dynamically changes over time, region_id represents a spatial region index in a spatial region information metadata track sample;
num_tiles_in_track, represents the number of tiles contained in a point cloud tile track;
tile_id, represents a tile identifier corresponding to a sample in a point cloud tile track, which is consistent with an identifier in a point cloud tile inventory;
config, represents point cloud tile track configuration information;
type, used to represent the type of point cloud data in a track when a point cloud tile track only contains a single type of point cloud data (geometric data or one type of attribute data).

Point cloud spatial region information data box:
a point cloud spatial region information data box (GPCCSpatialRegionlnfoBox) is used for providing static spatial region division information of a geometrically encoded point cloud, and may include coordinates and ranges of one or more spatial regions and G-PCC tile identifiers associated with all spatial regions.

When a geometrically encoded point cloud object is expressed by a 3D point cloud tile base track and point cloud tile tracks, the point cloud spatial region information data box is defined in the 3D point cloud tile base track and is contained in a track sample entry.

### Syntax:

```
    aligned(8) class GPCCSpatialRegionlnfoBox extends FullBox('gpsr',0,0){
        unsigned int(15) num_regions;
        unsigned int(1) tile_id_present;
        for (int i=0; i < num_regions; i++) {
            3DSpatialRegionStruct(1);
            if(tile_id_present){
                 unsigned int(16) num_tiles;
                 for(int j=0; j < num_tiles; j++)
                     unsigned int(16) tile_id; }
    else{
    unsigned int(16) num_tile_tracks;
    for(int j=0; k < num_tile_tracks; k++)
    unsigned int(16) tile_track_id;
        } }}
```

Semantics:
num_regions, represents the number of spatial regions contained in a point cloud object;
tile_id_present, the value being 0 represents that a tile identifier associated with a spatial region is not defined herein, and the value being 1 represents that a tile identifier associated with a spatial region is defined in this data box;
num_tiles, represents the number of tiles associated with a spatial region;
tile_id, represents a tile identifier corresponding to a sample in a point cloud tile track;
num_tile_tracks, represents the number of point cloud tile tracks where point cloud data is located in a spatial region;
tile_track_id, represents an identifier of a point cloud tile track where point cloud data is located in a spatial region.

Point cloud spatial region information timed metadata:
dynamic spatial region division information of a geometrically encoded point cloud is represented by point cloud spatial region information timed metadata, and spatial region division information at each moment is represented by a sample in a timed metadata track, including information such as the number, coordinates and ranges of spatial regions at the current moment and G-PCC tile identifiers associated with all spatial regions.

When a geometrically encoded point cloud object is expressed by a 3D point cloud tile base track and point cloud tile tracks, point cloud spatial region information timed metadata track is associated with the point cloud tile base track by a track reference data box.

### Sample format:

```
    aligned(8) DynamicGPCC3DSpatialRegionSample() {
       unsigned int(16) num_regions;
       for (int i=0; i < num_regions; i++) {
    3DSpatialRegionStruct(dynamic_dimension_flag);
    if(dynamic_tile_id_flag){
        unsigned int(16) num_tiles;
                 for(int j=0; j < num_tiles; j++)
                     unsigned int(16) tile_id;
    }
    unsigned int(16) num_tile_tracks;
    for(int j=0; k < num_tile_tracks; k++)
    unsigned int(16) tile_track_id;
    } }
```

Semantics:
num_tile_tracks, represents the number of point cloud tile tracks where point cloud data is located in a spatial region;
tile_track_id, represents an identifier of a point cloud tile track where point cloud data is located in a spatial region.

### Example 1:

The present example relates to static spatial region division and region identifiers in tile tracks.

In this example, partial access of 3D point cloud based on static spatial region division and description of point cloud spatial region information in a media file are mainly described. For G-PCC point cloud compression data supporting spatial region-based partial access, point cloud data corresponding to each spatial region supports independent decoding and rendering.

In the present example, the G-PCC point cloud compression data contains a plurality of spatial regions, and does not change over time, and the number of tiles and spatial position information described in a tile inventory also do not change over time. Therefore, overall division information of point cloud spatial regions is described in a sample entry of a point cloud tile base track, and the number of spatial regions, and information such as identifier, coordinates and included tile identifier of each spatial region are described by using a point cloud spatial region information data box (GPCCSpatialRegionlnfoBox).

A point cloud compression data storage structure described in this example is as shown in Fig. 7 below. The point cloud tile base track is an entry for accessing point cloud data, and a sample entry of the tile base track describes information such as positions and identifiers of five spatial regions. The tile base track refers to a plurality of tile tracks by using a track reference data box, each tile track corresponds to a spatial region, and information such as a spatial region identifier and a corresponding tile identifier is described in a sample entry of the tile track.

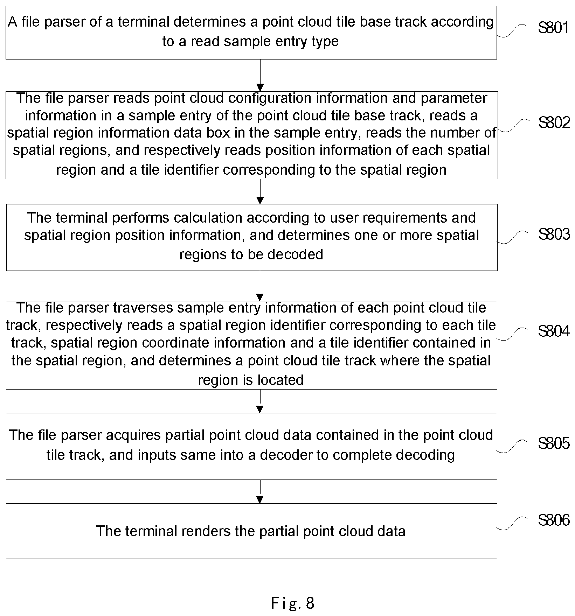

In the present example, for partial access based on a static point cloud spatial region, a terminal parsing flow is as shown in Fig. 8, and mainly includes the following steps:
step S801, a file parser of a terminal determines a point cloud tile base track according to a read sample entry type 'gpeb' or 'gpcb';
step S802, the file parser reads point cloud configuration information and parameter information in a sample entry of the point cloud tile base track, including SPS, APS, GPS, Tile Inventory, etc., reads a spatial region information data box in the sample entry, reads the number of spatial regions as five, and respectively reads position information of each spatial region and a tile identifier corresponding to the spatial region;
step S803, the terminal performs calculation according to user requirements and spatial region position information, and determines one or more spatial regions to be decoded, such as region 1;
step S804, the file parser traverses sample entry information of each point cloud tile track, respectively reads a spatial region identifier corresponding to each tile track, spatial region coordinate information and a tile identifier contained in the spatial region, and determines a point cloud tile track, i.e. tile track 1 where region 1 is located;
step S805, the file parser acquires partial point cloud data contained in the point cloud tile track, i.e. tile track 1, and inputs same into a decoder to complete decoding; and
step S806, the terminal renders the partial point cloud data.

### Example 2:

The present example relates to static spatial region division and spatial region data box identifier.

In the present example, a method of partial access of point cloud object is provided, wherein the point cloud contains static spatial regions, and an association relationship between the spatial regions and point cloud tile tracks is described in a spatial region data box.

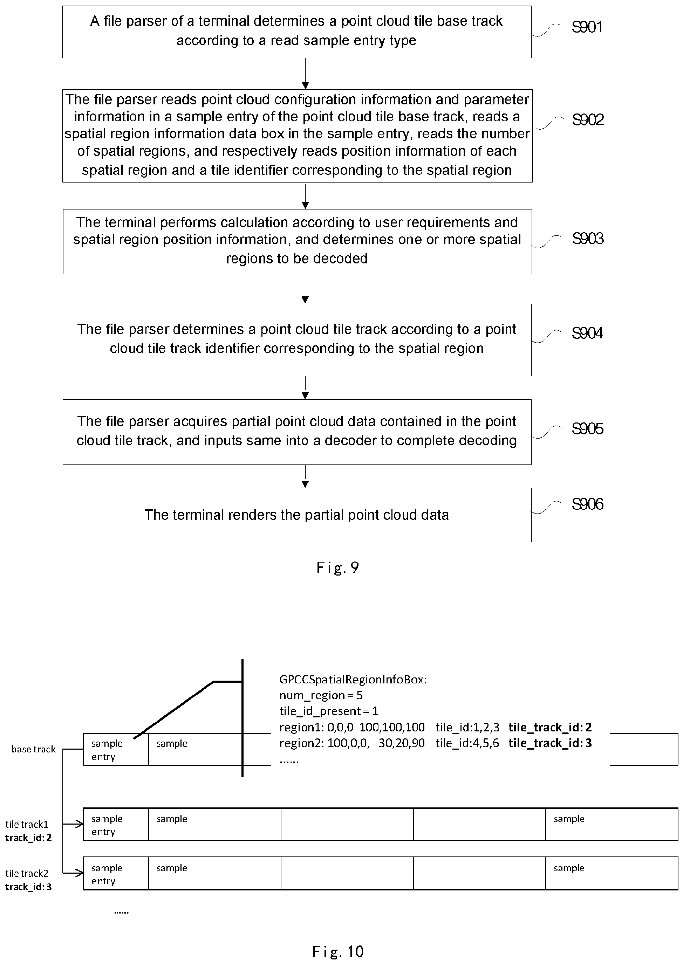

A point cloud compression data storage structure described in this example is as shown in Fig. 9 below. The point cloud tile base track is an entry for accessing point cloud data, and a sample entry of the tile base track describes information such as positions and identifiers of five spatial regions. The tile base track refers to a plurality of tile tracks by a track reference data box; each tile track corresponds to a fixed number of point cloud tiles, and a tile track identifier corresponding to each spatial region is described in a spatial region information data box.

For partial access based on a static point cloud spatial region in this example, a terminal parsing flow is as shown in Fig. 9, and mainly includes the following steps:
step S901, a file parser of a terminal determines a point cloud tile base track according to a read sample entry type 'gpeb' or 'gpcb';
step S902, the file parser reads point cloud configuration information and parameter information in a sample entry of the point cloud tile base track, including SPS, APS, GPS, Tile Inventory, etc., reads a spatial region information data box in the sample entry, reads the number of spatial regions as five, and respectively reads position information of each spatial region and a tile identifier corresponding to the spatial region;
step S903, the terminal performs calculation according to user requirements and spatial region position information, and determines one or more spatial regions to be decoded, such as region 1;
step S904, the file parser determines a point cloud tile track, i.e. tile track 1, according to a point cloud tile track identifier corresponding to region 1;
step S905, the file parser acquires partial point cloud data contained in the point cloud tile track, i.e. tile track 1, and inputs same into a decoder to complete decoding; and
step S906, the terminal renders the partial point cloud data.

### Example 3:

The present example mainly relates to dynamic spatial region division and region identifiers in tile tracks.

In the present example, G-PCC point cloud compression data contains a plurality of spatial regions, the division of the spatial regions dynamically changes over time, and the number of tiles described by a tile inventory and spatial position information may also dynamically change over time. Therefore, overall division information of point cloud spatial regions is described by samples in a point cloud spatial region metadata track, and each sample in the metadata track describes the number of spatial regions at this moment, and information such as identifier, coordinates and included tile identifier of each spatial region. Describing division of spatial regions by the point cloud spatial region metadata track includes the following three scenarios:
1) the number or position information of spatial regions changes over time, and tile inventory information does not change over time;
2) the number or position information of spatial regions is fixed, and tile inventory information dynamically changes over time; and
3) the number or position information of spatial regions dynamically changes over time, and tile inventory information also dynamically changes over time.

A point cloud compression data storage structure described in this example is as shown in Fig. 10. A point cloud tile base track is an entry for accessing point cloud data, and the tile base track refers to a spatial region metadata track by a track reference data box. Each sample in the metadata track respectively describes information such as positions and identifiers of a plurality of spatial regions at the current moment. The tile base track also refers to a plurality of tile tracks by a track reference data box, each tile track corresponds to a dynamically-changing spatial region which has a spatial region identifier described in a sample entry of the tile track.

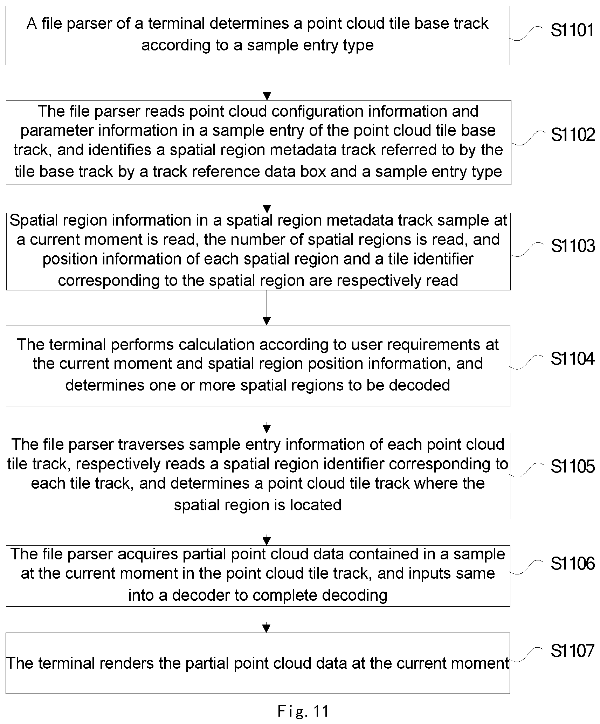

For partial access based on a dynamic point cloud spatial region in this example, a terminal parsing flow is as shown in Fig. 11, and mainly includes the following steps:
step S1101, a file parser of a terminal determines a point cloud tile base track according to a read sample entry type 'gpeb' or 'gpcb';
step S1102, the file parser reads point cloud configuration information and parameter information in a sample entry of the point cloud tile base track, including SPS, APS, GPS, Tile Inventory, etc., and identifies a spatial region metadata track referred to by the tile base track by a track reference data box and a sample entry type 'gpdr';
step S1103, spatial region information in a spatial region metadata track sample at a current moment is read, for example, the current moment is a moment where a second sample is located, the number of spatial regions is read as six, and position information of each spatial region and a tile identifier corresponding to the spatial region are respectively read;
step S1104, the terminal performs calculation according to user requirements at the current moment and spatial region position information, and determines one or more spatial regions to be decoded, such as region 2;
step S1105, the file parser traverses sample entry information of each point cloud tile track, respectively reads a spatial region identifier corresponding to each tile track, and determines a point cloud tile track, i.e. tile track 2 where the region 2 is located;
step S1106, the file parser acquires partial point cloud data contained in a sample at the current moment in the point cloud tile track, i.e. tile track 2, and inputs same into a decoder to complete decoding; and
step S1107, the terminal renders the partial point cloud data at the current moment.

### Example 4:

The present example relates to dynamic spatial region division and spatial region metadata identifier.

In the present example, a method of partial access of point cloud object is provided, wherein the point cloud contains dynamic spatial regions, and an association relationship between the spatial regions and point cloud tile tracks is described in a sample of a spatial region timed metadata track.

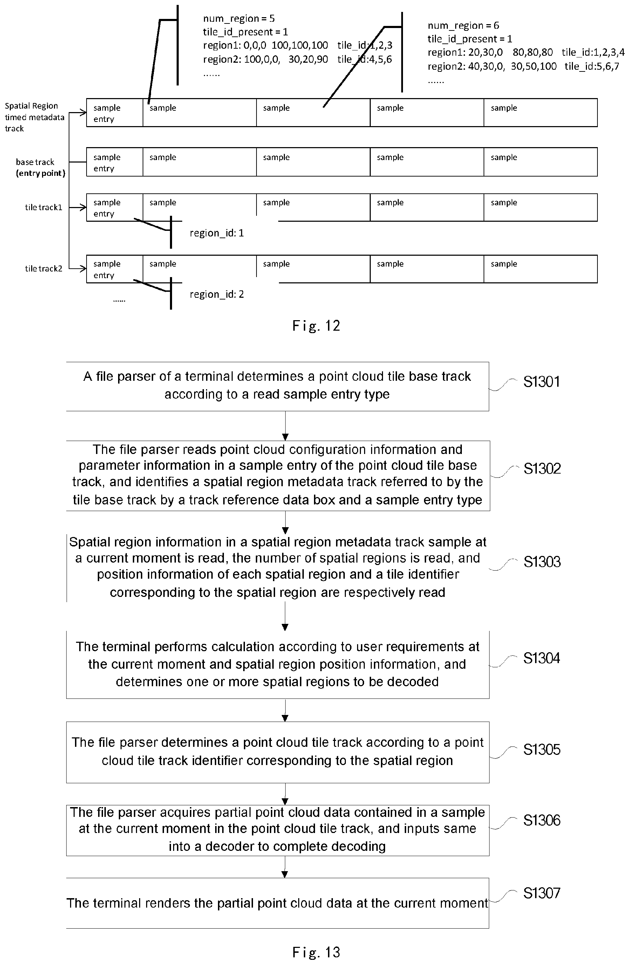

A point cloud compression data storage structure described in this example is as shown in Fig. 12. A point cloud tile base track is an entry for accessing point cloud data, and the tile base track refers to a spatial region metadata track by a track reference data box. Each sample in the metadata track respectively describes information such as positions and identifiers of a plurality of spatial regions at the current moment. The tile base track also refers to a plurality of tile tracks by a track reference data box, and each tile track corresponds to a dynamically-changing spatial region. A point cloud tile track identifier corresponding to each moment and each spatial region is described in a metadata track sample.

In a method for partial access based on a dynamic point cloud spatial region in this example, a terminal parsing flow is as shown in Fig. 13, and mainly includes the following steps:
step S1301, a file parser of a terminal determines a point cloud tile base track according to a read sample entry type 'gpeb' or 'gpcb';
step S1302, the file parser reads point cloud configuration information and parameter information in a sample entry of the point cloud tile base track, including SPS, APS, GPS, Tile Inventory, etc., and identifies a spatial region metadata track referred to by the tile base track by a track reference data box and a sample entry type 'gpdr';
step S1303, spatial region information in a spatial region metadata track sample at a current moment is read, for example, the current moment is a moment where a second sample is located, the number of spatial regions is read as six, and position information of each spatial region and a tile identifier corresponding to the spatial region are respectively read;
step S1304, the terminal performs calculation according to user requirements at the current moment and spatial region position information, and determines one or more spatial regions to be decoded, such as region 2;
step S1305, the file parser determines a point cloud tile track, i.e. tile track 2, according to a point cloud tile track identifier corresponding to region 2;
step S1306, the file parser acquires partial point cloud data contained in a sample at the current moment in the point cloud tile track, i.e. tile track 2, and inputs same into a decoder to complete decoding; and
step S1307, the terminal renders the partial point cloud data at the current moment.

### Embodiment 2

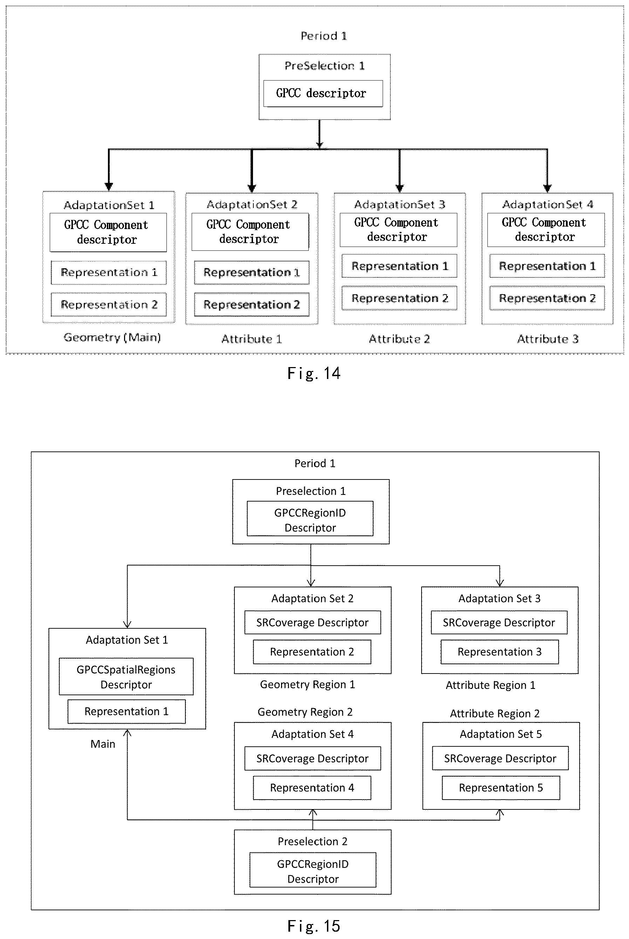

The present embodiment provides a spatial region-based 3D point cloud transmission signaling method. In this embodiment, spatial region-based 3D point cloud transmission signaling is described. Geometric encoding-based point cloud data transmission can be described by an MPEG-DASH transmission protocol, and a basic point cloud data code stream can be represented by a plurality of adaptation sets in a DASH MPD description file, and the structure thereof is as shown in Fig. 14.

Hereinafter, spatial region-based pre-selection signaling is described.

The spatial region-based pre-selection signaling is represented by a Pre-selection component in the MPD file, wherein a @codecs attribute value of the Pre-selection component should be set as 'gpt1', which represents that the current pre-selection signaling contains partial point cloud data belonging to the same spatial region; and spatial region-based pre-selection signaling of G-PCC can be represented by a Pre-selection component in a Period component or a Pre-selection component in a point cloud tile component adaptation set.

A @pre-selectionComponents attribute value in the Pre-selection component should indicate a point cloud tile component adaptation set (Tile Adaptation Set) containing geometric data and a point cloud tile component adaptation set containing attribute data, and a Main Tile Adaptation Set containing parameter set information is represented by a @dependencyId value in the point cloud tile component adaptation set containing geometric data. Each Pre-selection component should contain one or more point cloud region identifier descriptors, for describing spatial region information indicated by the pre-selection signaling.

Hereinafter, a 3D point cloud spatial region descriptor will be described.

A 3D point cloud component descriptor is used to indicate spatial region information in an adaptation set corresponding to a point cloud tile track. Each point cloud tile track is represented by an independent tile adaptation set in a DASH MPD file, and a @codec attribute value of the tile adaptation set should be 'gpt1', which represents that point cloud compression data included therein is derived from the point cloud tile track.

Single spatial region information corresponding to the point cloud tile track is represented by a spatial region descriptor, and the descriptor is Essential Property, the value of schemeldUri is "urn:mpeg:mpegl:gpcc:2020:spatialRegion", and the definition of the descriptor is as shown in Table 1:

**Table 1**

| **3D point cloud spatial region descriptor** | **Usage** | **Data type** | **Description** |
|---|---|---|---|
| **SRCoverage** | 0,1 | gpcc:spa tialRegio ncovera geType | Spatial region coverage descriptor |
| **SRCoverage** @region_id | Mandatory | xs:unsig nedShort | Represent a spatial region identifier, which is consistent with a GPCCSpatialRegions descriptor and an identifier in a static spatial region information data box in a track. |
| **SRCoverage** @x | Optional | xs:int | x-axis coordinate of a vertex of a spatial region |
| **SRCoverage** @y | Optional | xs:int | y-axis coordinate of a vertex of a spatial region |
| **SRCoverage** @z | Optional | xs:int | z-axis coordinate of a vertex of a spatial region |
| **SRCoverage** @dx | Optional | xs:int | x-axis length of a vertex of a spatial region |
| **SRCoverage** @dy | Optional | xs:int | y-axis length of a vertex of a spatial region |
| **SRCoverage** @dz | Optional | xs:int | z-axis length of a vertex of a spatial region |
| **SRCoverage @tile_Adapta tionSetID** | Optional | StringVe ctorType | Represent point cloud tile adaptation set identifiers corresponding to one or more specified spatial regions |

Hereinafter, a 3D point cloud spatial region identifier descriptor will be described.
the 3D point cloud spatial region identifier descriptor (GPCCRegionlD Descriptor) is used for indicating spatial region information preselected by a point cloud. Each Pre-selection component contains one or more spatial region identifier descriptors, the descriptors being Essential Property, the value of @schemeIdUri is "urn:mpeg:mpegl:gpcc:2020:RegionlD", the definition of the descriptors is as shown in Table 2 below:

**Table 2**

| 3D point cloud spatial region coverage descriptor | Usage | Data type | Description |
|---|---|---|---|
| @region_id | Manda tory | xs:unsignedShort | Represent a spatial region identifier, which is consistent with a GPCCSpatialRegions descriptor and an identifier in a static spatial region information data box in a track. |

### Example 1: Point cloud transmission based on static spatial region division.

In this example, a 3D point cloud transmission method based on static spatial region division and a description method for point cloud spatial region information in a DASH MPD file are provided.

In the present example, G-PCC point cloud compression data contains a plurality of spatial regions, and does not change over time, and the number of tiles and spatial position information described in a tile inventory also do not change over time. Overall division information of the point cloud spatial region is described in a tile main adaptation set by a point cloud space information descriptor (GPCCSpatialRegions descriptor) and includes information such as the number of spatial regions, and identifier, coordinates and included tile identifier of each spatial region.

In this example, description information of a DASH MPD description file in a single period is as shown in Fig. 15.

The DASH MPD file of this example is as follows:

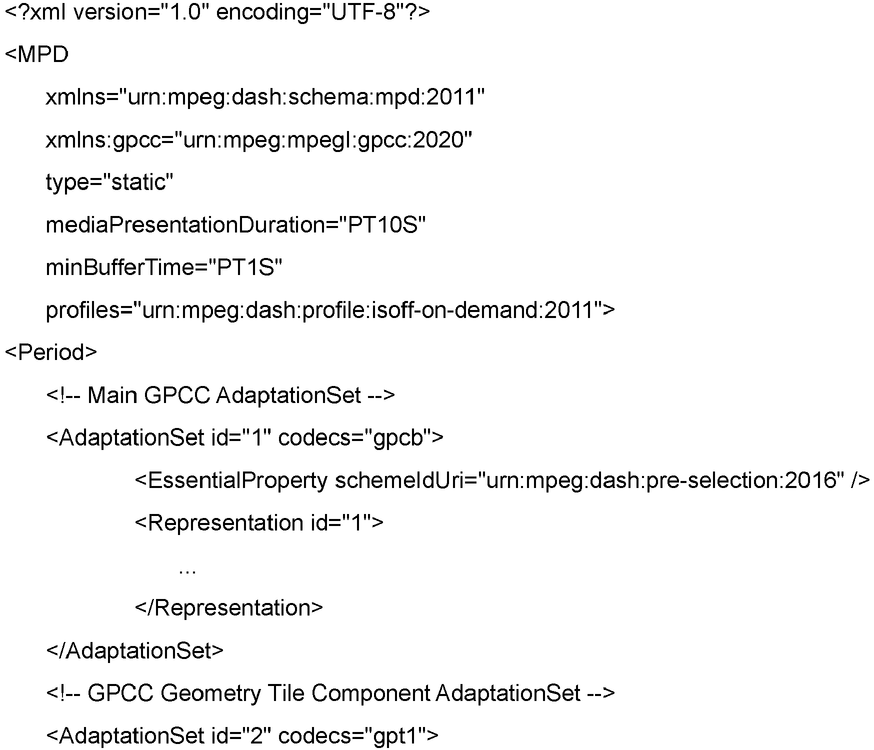

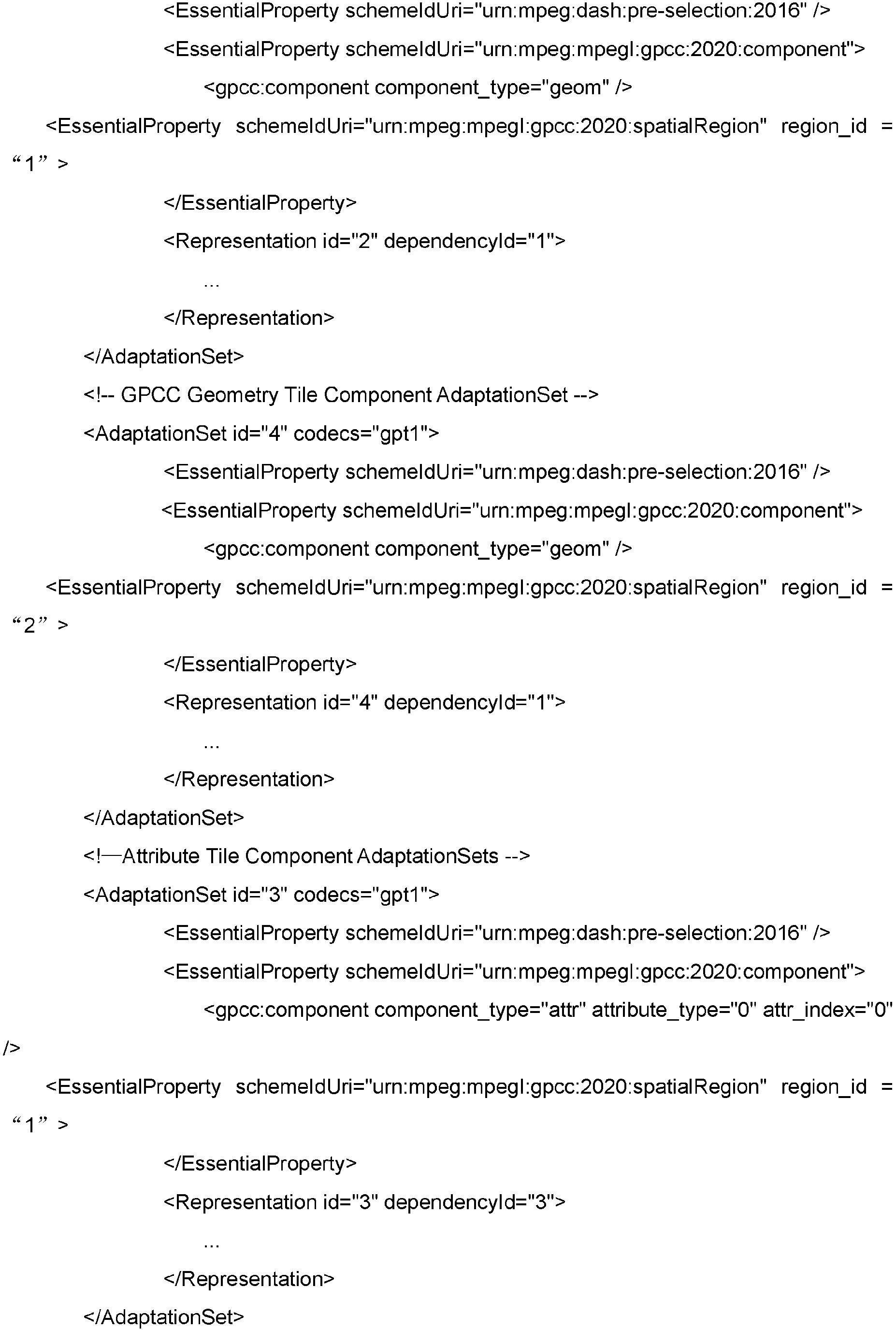

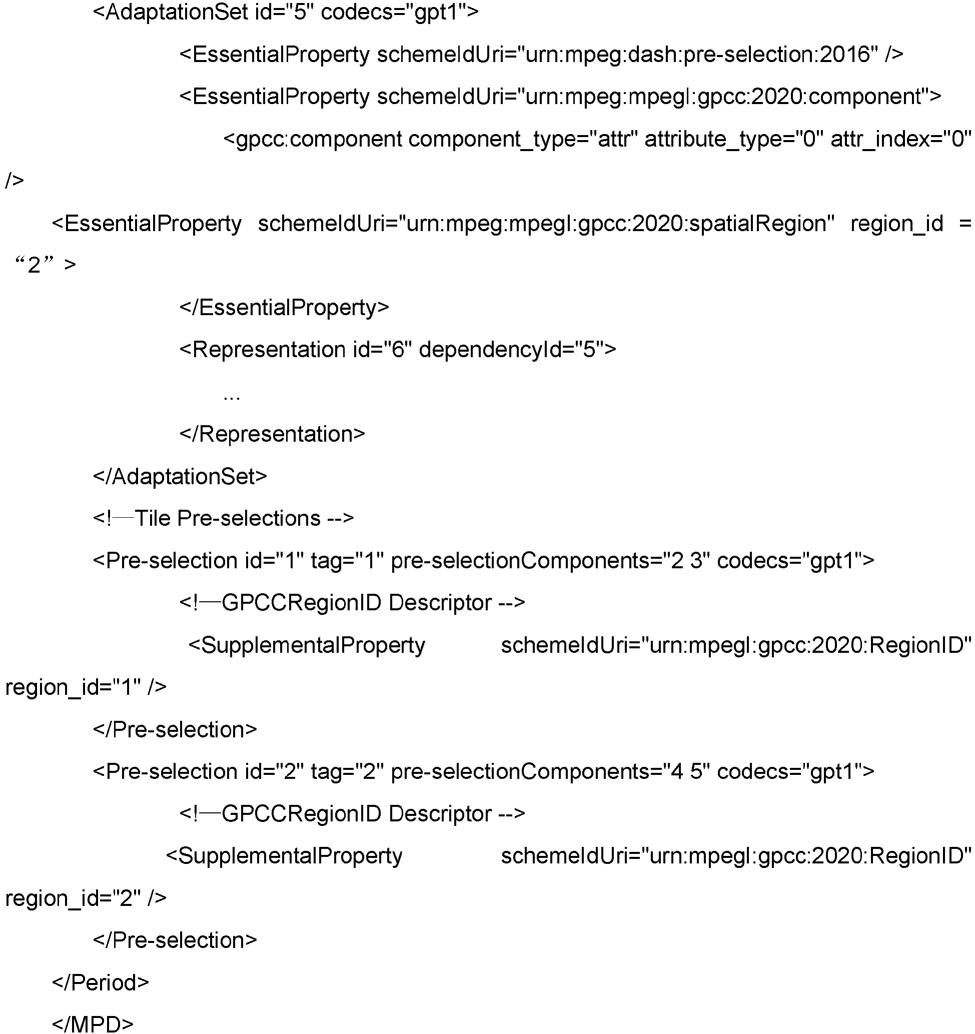

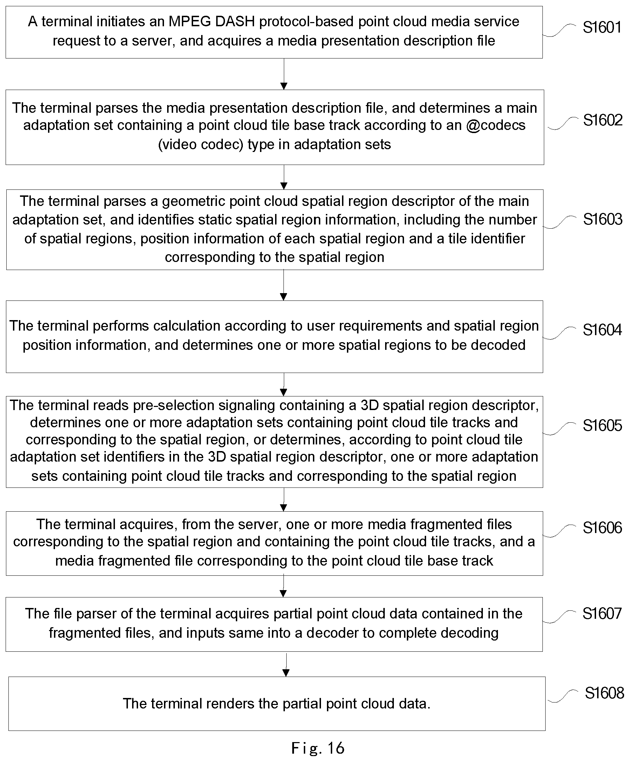

A flow of point cloud transmission based on a static point cloud spatial region in the present example is as shown in Fig. 16, and mainly includes the following steps:
step S1601, a terminal initiates an MPEG DASH protocol-based point cloud media service request to a server, and acquires a media presentation description (MPD) file;
step S1602, the terminal parses the media presentation description file, and determines a main adaptation set containing a point cloud tile base track according to an @codecs type 'gpcb' in adaptation sets;
step S1603, the terminal parses a geometric point cloud spatial region descriptor of the main adaptation set, and identifies static spatial region information, including the number of spatial regions, position information of each spatial region and a tile identifier corresponding to the spatial region;
step S1604, the terminal performs calculation according to user requirements and spatial region position information, and determines one or more spatial regions to be decoded, such as region 1;
step S1605, the terminal reads pre-selection signaling containing a 3D spatial region descriptor, determines one or more adaptation sets containing point cloud tile tracks and corresponding to the region 1, or determines, according to point cloud tile adaptation set identifiers in the 3D spatial region descriptor, one or more adaptation sets containing point cloud tile tracks and corresponding to the region 1;
step S1606, the terminal acquires, from the server, one or more media fragmented files corresponding to the region 1 and containing the point cloud tile tracks, and a media fragmented file corresponding to the point cloud tile base track;
step S1607, the file parser of the terminal acquires partial point cloud data contained in the fragmented files in step S1606, and inputs same into a decoder to complete decoding; and step S1608, the terminal renders the partial point cloud data.

### Example 2: Point cloud transmission based on dynamic spatial region division.

This example describes a 3D point cloud transmission method based on dynamic spatial region division and a description method for point cloud spatial region information in a DASH MPD file.

In the present example, G-PCC point cloud compression data contains a plurality of spatial regions, and dynamically changes over time. Division information of the point cloud spatial regions at each moment is stored in a spatial region metadata track, and is described in an MPD file by independent adaptation sets. The adaptation sets are associated with a tile main adaptation set by @associationld and @associationType attributes.

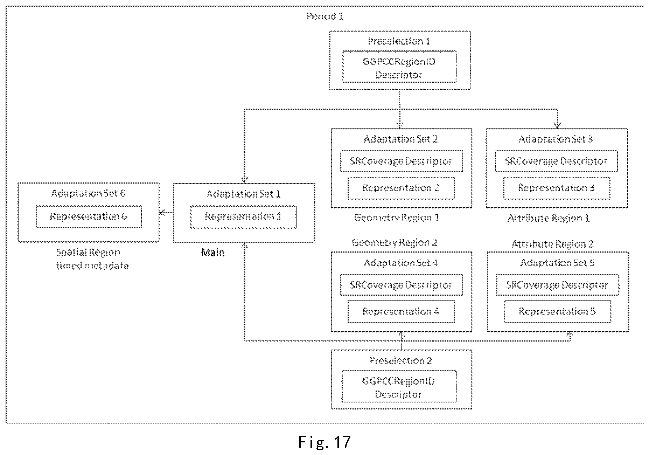

In this example, description information of a DASH MPD description file in a single period is as shown in Fig. 17.

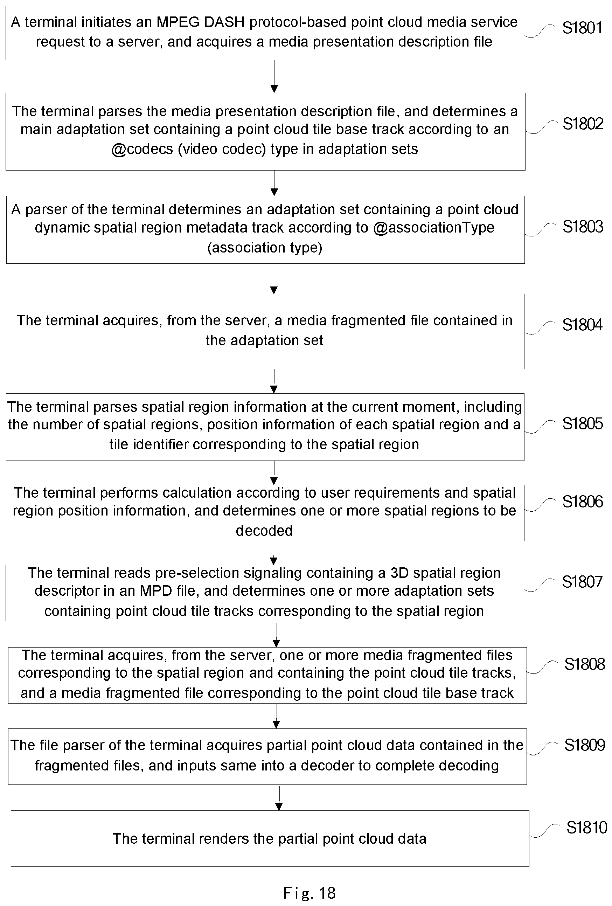

A flow of point cloud transmission based on a dynamic point cloud spatial region in the present example is as shown in Fig. 18, and mainly includes the following steps:
step S1801, a terminal initiates an MPEG DASH protocol-based point cloud media service request to a server, and acquires a media presentation description (MPD) file;
step S1802, the terminal parses the media presentation description file, and determines a main adaptation set containing a point cloud tile base track according to an @codecs type 'gpcb' in adaptation sets;
step S1803, a parser of the terminal determines an adaptation set (Adaptation 6) containing a point cloud dynamic spatial region metadata track according to @associationType 'gpsr';
step S1804, the terminal acquires, from the server, a media fragmented file contained in the adaptation set in step S1803, i.e. point cloud dynamic spatial region metadata;
step S1805, the terminal parses spatial region information at the current moment, including the number of spatial regions, position information of each spatial region and a tile identifier corresponding to the spatial region;
step S1806, the terminal performs calculation according to user requirements and spatial region position information, and determines one or more spatial regions to be decoded, such as region 1;
step S1807, the terminal reads pre-selection signaling containing a 3D spatial region descriptor in an MPD file, and determines one or more adaptation sets containing point cloud tile tracks corresponding to the region 1;
step S1808, the terminal acquires, from the server, one or more media fragmented files corresponding to the region 1 and containing the point cloud tile tracks, and a media fragmented file corresponding to the point cloud tile base track;
step S1809, the file parser of the terminal acquires partial point cloud data contained in the fragmented files in step S1808, and inputs same into a decoder to complete decoding; and
step S1810, the terminal renders the partial point cloud data.

Embodiments of the present disclosure further provide a computer-readable storage medium, the computer-readable storage medium storing a computer program, wherein the computer program is configured to execute, when running, the steps in any one of the method embodiments above.

In some exemplary embodiments, the computer-readable storage medium may include, but is not limited to: any medium that can store a computer program, such as a USB flash drive, a Read-Only Memory (ROM for short), a Random Access Memory (RAM for short), a removable hard disk, a magnetic disk, or an optical disc.

Embodiments of the present disclosure further provide an electronic apparatus, including a memory and a processor; wherein the memory stores a computer program, and the processor is configured to run the computer program to execute the steps in any one of the method embodiments above.

In some exemplary embodiments, the electronic apparatus can further include a transmission device and an input/output device, wherein the transmission device is connected to the processor, and the input/output device is connected to the processor.

For specific examples in the present embodiment, reference can be made to the examples described in the embodiments and exemplary embodiments, and thus they will not be repeated again in the present embodiment.

It is apparent that a person skilled in the art shall understand that all of the modules or steps in some embodiments of the present disclosure may be implemented by using a general computation apparatus, may be centralized on a single computation apparatus, or may be distributed on a network composed of multiple computation apparatuses, and may be implemented by using executable program codes of the computation apparatus. Thus, the modules or steps may be stored in a storage apparatus and executed by the computation apparatus. In some cases, the shown or described steps may be executed in a sequence different from that shown herein, or they are manufactured into integrated circuit modules, or multiple modules or steps therein are manufactured into a single integrated circuit module. Thus, the present disclosure is not limited to any specific hardware and software combinations.

The content above only relates to preferred embodiments of the present disclosure and is not intended to limit the present disclosure. For a person skilled in the art, the present disclosure may have various modifications and variations. Any modifications, equivalent replacements, improvements, etc. made within the spirit and principle of the present disclosure shall all fall within the scope of protection of the present disclosure.

## Claims

1. A three-dimensional point cloud data processing method, comprising:
identifying, from a container file of a geometrically encoded point cloud bit stream of an original point cloud, one geometrically encoded point cloud tile base track and one or more geometrically encoded point cloud tile tracks, wherein the one geometrically encoded point cloud tile base track and one or more geometrically encoded point cloud tile tracks correspond to one or more three-dimensional spatial regions of the original point cloud;
decoding geometrically encoded point cloud compression data encapsulated in the one or more geometrically encoded point cloud tile tracks, wherein the geometrically encoded point cloud compression data corresponds to partial regions of the one or more three-dimensional spatial regions; and
rendering a point cloud in the partial three-dimensional spatial regions according to the decoded point cloud data.

2. The method according to claim 1, wherein the one or more three-dimensional spatial regions comprise:
three-dimensional spatial region information determined according to a spatial region information data box of geometrically encoded point cloud data in a geometrically encoded point cloud tile base track sample entry, wherein the three-dimensional spatial region information is static three-dimensional spatial region information not changing over time.

3. The method according to claim 1, wherein the one or more three-dimensional spatial regions comprise:
three-dimensional spatial region information determined according to a dynamic geometrically encoded point cloud spatial region metadata track, wherein the three-dimensional spatial region information is dynamic three-dimensional spatial region information dynamically changing over time.

4. The method according to claim 2 or 3, wherein the three-dimensional spatial region information at least comprises one of: the number of spatial regions, identifiers of the spatial regions, vertex coordinates of the spatial regions, geometric parameters of the spatial regions, tile identifiers corresponding to the spatial regions, and identifiers of the geometrically encoded point cloud tile tracks.

5. The method according to claim 1 or 2, wherein decoding geometrically encoded point cloud compression data encapsulated in the one or more geometrically encoded point cloud tile tracks comprises:
determining geometry tile tracks corresponding to the partial three-dimensional spatial regions according to static spatial region information of a geometry tile track sample entry of the geometrically encoded point cloud data; and
decoding the geometrically encoded point cloud data in the geometry tile tracks.

6. The method according to claim 5, wherein the static spatial region information of the geometry tile track sample entry of the geometrically encoded point cloud data at least comprises one of: a spatial region information display flag bit, a static spatial region flag bit, a spatial region identifier and three-dimensional spatial region information.

7. The method according to claim 1 or 3, wherein decoding geometrically encoded point cloud compression data encapsulated in the one or more geometrically encoded point cloud tile tracks further comprises:
determining geometry tile tracks corresponding to the partial three-dimensional spatial regions according to dynamic spatial region information of a geometry tile track sample entry of geometrically encoded point cloud data; and
decoding the geometrically encoded point cloud data in the geometry tile tracks.

8. The method according to claim 7, wherein the dynamic spatial region information of the geometry tile track sample entry comprises at least one of: a spatial region information display flag bit, a dynamic spatial region flag bit and a spatial region identifier.

9. The method according to claim 1 or 2, wherein decoding geometrically encoded point cloud compression data encapsulated in the one or more geometrically encoded point cloud tile tracks comprises:
determining geometry tile tracks corresponding to the partial three-dimensional spatial regions according to geometry tile track identifiers in the spatial region information data box of the geometrically encoded point cloud data, or determining geometry tile tracks corresponding to the partial three-dimensional spatial regions according to geometry tile track identifiers in a dynamic geometrically encoded point cloud spatial region metadata track sample; and
decoding the geometrically encoded point cloud data in the geometry tile tracks.

10. The method according to claim 1, wherein the one or more three-dimensional spatial regions comprise:
the three-dimensional spatial region information determined according to a three-dimensional spatial region information descriptor in a main tile adaptation set corresponding to a geometry tile base track in a DASH MPD description file, wherein the three-dimensional spatial region information is static spatial region information not changing over time.

11. The method according to claim 1, wherein the one or more three-dimensional spatial regions comprise:
the three-dimensional spatial region information determined according to an adaptation set containing dynamic three-dimensional spatial region information metadata in a DASH MPD description file, wherein the three-dimensional spatial region information is dynamic spatial region information dynamically changing over time.

12. The method according to claim 1 or 10 or 11, wherein the geometrically encoded point cloud data is represented by the main tile adaptation set corresponding to the geometry tile base track and one or more tile component adaptation sets corresponding to geometry tile tracks in the DASH MPD description file.

13. The method according to claim 12, wherein the three-dimensional spatial region information comprises at least one of: the number of spatial regions, identifiers of the spatial regions, vertex coordinates of the spatial regions, geometric parameters of the spatial regions, and tile identifiers corresponding to the spatial regions.

14. The method according to claim 1, wherein decoding geometrically encoded point cloud compression data encapsulated in the one or more geometrically encoded point cloud tile tracks comprises:
determining, according to a three-dimensional spatial region identifier descriptor in DASH MPD description file pre-selection signaling, a main tile adaptation set and one or more adaptation sets containing geometry tile tracks and corresponding to the partial three-dimensional spatial regions; or determining, according to point cloud tile adaptation set identifiers described by a three-dimensional spatial region descriptor in a main tile adaptation set, the main tile adaptation set and one or more adaptation sets containing geometry tile tracks and corresponding to the partial three-dimensional spatial regions; and
decoding geometrically encoded point cloud data corresponding to the main tile adaptation set and the one or more adaptation sets containing the geometry tile tracks.

15. The method according to claim 14, wherein the three-dimensional spatial region identifier descriptor in the pre-selection signaling comprises a spatial region identifier, which is the same as a spatial region identifier in a spatial region information data box of the geometrically encoded point cloud data.

16. The method according to claim 1, wherein decoding geometrically encoded point cloud compression data encapsulated in the one or more geometrically encoded point cloud tile tracks comprises:
determining a main tile adaptation set, and determining one or more adaptation sets containing geometry tile tracks and corresponding to the partial three-dimensional spatial regions according to a three-dimensional spatial region descriptor in the adaptation sets containing the geometry tile tracks; and
decoding geometrically encoded point cloud data corresponding to the main tile adaptation set and the one or more adaptation sets containing the geometry tile tracks.

17. The method according to claim 14 or 16, wherein the three-dimensional spatial region descriptor comprises at least one of: a spatial region identifier, a spatial region position, a spatial region size, and a point cloud tile adaptation set identifier corresponding to the spatial region.

18. A three-dimensional point cloud data processing apparatus, comprising:
an identification module, configured to identify, from a container file of a geometrically encoded point cloud bit stream of an original point cloud, one geometrically encoded point cloud tile base track and one or more geometrically encoded point cloud tile tracks, wherein the one geometrically encoded point cloud tile base track and one or more geometrically encoded point cloud tile tracks correspond to one or more three-dimensional spatial regions of the original point cloud;
a decoding module, configured to decode geometrically encoded point cloud compression data encapsulated in the one or more geometrically encoded point cloud tile tracks, wherein the geometrically encoded point cloud compression data corresponds to partial regions of the one or more three-dimensional spatial regions; and
a rendering module, configured to render a point cloud in the partial three-dimensional spatial regions according to the decoded point cloud data.

19. A computer-readable storage medium, on which a computer program is stored, wherein when the computer program is executed by a processor, the computer program is configured to cause the processor to implement the steps of the method according to any one of claims 1-18.

20. An electronic apparatus, comprising a memory, a processor, and a computer program which is stored on the memory and can be run on the processor, wherein the processor is configured to execute the computer program to implement the steps of the method according to any one of claims 1-18.
